# EUROPÄISCHE PATENTSCHRIFT

(11) **EP 4 302 289 B1**
(45) Veröffentlichungstag und Bekanntmachung des Hinweises auf die Patenterteilung: **29.07.2026**
(21) Anmeldenummer: 22706248.6
(22) Anmeldetag: 15.02.2022
(51) Int. Cl.: G08G 1/16, H04W 4/44, H04W 4/46, G08G 1/01, B60W 50/02

(54) **VERFAHREN UND VORRICHTUNG ZUR INHALTLICHEN ABSICHERUNG VON OBJEKTDATEN ZUR KOLLEKTIVEN PERZEPTION**
METHOD AND UNIT FOR SECURING THE CONTENT OF OBJECT DATA FOR COLLECTIVE PERCEPTION
PROCÉDÉ ET UNITÉ PERMETTANT DE S'ASSURER DU CONTENU DE DONNÉES D'OBJET POUR UNE PERCEPTION COLLECTIVE

(30) Priorität: 01.03.2021 DE 102021201910
(43) Veröffentlichungstag der Anmeldung: 10.01.2024
(73) Patentinhaber: AUMOVIO Germany GmbH, 60488 Frankfurt am Main (DE)
(72) Erfinder: STRUNCK, Sebastian, 81739 München (DE); MENZEL, Marc, 81739 München (DE)
(74) Vertreter: Aumovio Corporation
(86) Internationale Anmeldenummer: PCT/DE2022/200019
(87) Internationale Veröffentlichungsnummer: WO 2022/184213

(56) Entgegenhaltungen:
- DE-A1- 102018 120 655
- DE-A1- 102019 209 558
- DE-A1- 102020 212 565

## Beschreibung

### Technisches Gebiet

Die vorliegende Erfindung betrifft ein Verfahren und Vorrichtung zur inhaltlichen Absicherung von Objektdaten zur kollektiven Perzeption.

### Technischer Hintergrund

Im Hinblick auf das Verteilen von mit Sensoren erfassten Objektdaten zur Beschreibung von detektierten Objekten mittels Fahrzeug-zu-X Kommunikation, auch unter dem Begriff der kollektiven Perzeption bekannt, zielt die Absicherung derzeit primär auf die Qualität der einzelnen Daten ab.

DE 10 2018 120 655 A1 bezieht sich auf die Authentifizierung von Fahrzeug-zu-Fahrzeug-Kommunikation. Sensordaten werden von einem ersten Fahrzeug empfangen, sekundäre Sensordaten von einem zweiten Fahrzeug. Basierend auf den Sensordaten und den sekundären Sensordaten wird eine Authentifizierung extrahiert, die eine Nähe des zweiten Fahrzeugs zum ersten Fahrzeug oder ein gemeinsames Objekt umfasst. Es wird ermittelt, ob die Authentifizierung einen Vertrauensschwellwert des ersten Fahrzeugs erfüllt. Eine Steuerung ist in einem Fahrzeug untergebracht und kann einer autonomen Navigation und Kollisionsvermeidung durchführen. Die Steuerung umfasst ein V2V-Modul und ein Standortverifizierungsmodul. Das Standortverifizierungsmodul verifiziert den Standort des anderen Fahrzeugs durch Austauschen von Bildern oder anderen Sensordaten, Objektkarten und/oder Geschwindigkeitskarten. Die Authentifizierung benutzt beliebige Arten von Sensordaten. Beide Fahrzeuge umfassen einen Kamera-Snapshot und eine Umgebungskarte. Jedes Fahrzeug verifiziert, ob extrahierte Informationen mit den eigenen übereinstimmen.

Nachveröffentlichte DE 10 2020 212 565 A1 bezieht sich auf das Validieren von Umgebungsinformationen. Umgebungsinformationen über eine Umgebung eines Fahrzeugs werden von einem anderen Fahrzeug empfangen. Die Umgebungsinformation wird zum Erzeugen von Zuverlässigkeitsinformationen über die Umgebungsinformation validiert. Die Umgebungsinformationen umfassen Messdaten der Umgebung und/oder interpretierte Messdaten. Die Messdaten können Sensordaten umfassen. Die interpretierten Messdaten enthalten weiterverarbeitete oder interpretierte Informationen über Objekte oder Situationen in der Umgebung. Die interpretierten Messdaten umfassen CAM, CPM, DENM oder SPaT- Nachrichten.

Die WO 2014 / 033 172 A1 betrifft ein Verfahren zum Durchführen einer Sicherheitsfunktion eines Fahrzeugs, bei dem mittels eines Kommunikationssystems Daten, die für das Durchführen der Sicherheitsfunktion erforderlich sind, auf eine Steuereinheit des Fahrzeugs übertragen werden, wobei mittels der Steuereinheit in Abhängigkeit von den übertragenen Daten Steuersignale erzeugt und auf eine Funktionseinheit des Fahrzeugs übertragen werden. Mittels der Funktionseinheit wird die Sicherheitsfunktion in Abhängigkeit von den Steuersignalen durchgeführt, wobei Diagnosetests in zeitlichen Abständen wiederholt durchgeführt werden. Mit den Diagnosetests wird dabei überprüft, ob in einem oder in mehreren zum Durchführen des Verfahrens verwendeten elektrischen, elektronischen und/oder programmierbaren Systemen eine Störung besteht, die die Durchführung der Sicherheitsfunktion beeinträchtigen kann. Mittels des Kommunikationssystems werden außerdem Metadaten der Daten auf die Steuereinheit übertragen, wobei die Metadaten Informationen über die zum Durchführen des Verfahrens verwendeten Systeme beinhalten. Unter Verwendung dieser Informationen wird durch die Steuereinheit ein Zuverlässigkeitswert der Daten ermittelt, der von der Wahrscheinlichkeit für das Auftreten von Fehlern oder Störungen, die die Durchführung der Sicherheitsfunktion beeinträchtigen können und von der Wahrscheinlichkeit, dass ein Auftreten dieser Fehler oder Störungen mittels der Diagnosetests und/oder durch einen Fahrer des Fahrzeugs rechtzeitig vor einer Beeinträchtigung der Sicherheitsfunktion erkannt wird, abhängig ist. In Abhängigkeit von dem Zuverlässigkeitswert wird durch die Steuereinheit weiterhin geprüft, ob die übertragenen Daten für das Durchführen der Sicherheitsfunktion hinreichend zuverlässig sind. Allerdings wird hierbei grundsätzlich davon ausgegangen, dass ein Erfasser von Daten die Wahrhaftigkeit der Daten sicherstellen muss.

Nachteilig hieran ist, dass sicherheitskritische Verkehrssituationen ausgelöst werden können, wenn die Integrität der Daten beispielsweise aufgrund von beabsichtigter Manipulation nicht gegeben ist.

Als Aufgabe der Erfindung kann es angesehen werden die funktionelle Sicherheit bei der kollektiven Perzeption unter Verwendung von Fahrzeug-zu-X Kommunikation zu verbessern.

Diese Aufgabe wird durch die Gegenstände der unabhängigen Ansprüche gelöst. Vorteilhafte Ausgestaltungen können beispielsweise den Unteransprüchen entnommen werden. Der Inhalt der Ansprüche wird durch ausdrückliche Inbezugnahme zum Inhalt der Beschreibung gemacht.

Der zugrundeliegende Gedanke ist, dass ein erster Verkehrsteilnehmer Objektdaten zur Beschreibung eines durch eine Erfassungseinrichtung eines zweiten Verkehrsteilnehmers und/oder einer Infrastruktureinrichtung detektierten Objekts mittels weiterer Quellen verifiziert. Die Objektdaten werden hierbei durch den zweiten Verkehrsteilnehmer und/oder die Infrastruktureinrichtung insbesondere im Wege der Fahrzeug-zu-X Kommunikation ausgesandt und durch den ersten Verkehrsteilnehmer empfangen. Durch die Verifizierung kann eine inhaltlichen Absicherung von Daten zur kollektiven Perzeption erfolgen bzw. die funktionelle Sicherheit bei mittels Fahrzeug-zu-X Kommunikation erhaltenen Objektdaten zur Beschreibung von durch wenigstens eine Erfassungseinrichtung eines zweiten Verkehrsteilnehmers und/oder wenigstens eine Erfassungseinrichtung einer Infrastruktureinrichtung detektierten Objekts realisiert werden. Ein Objekt kann dabei insbesondere ein Verkehrsteilnehmer oder ein sonstiges Hindernis darstellen. Die mittels der Sensoren erfassten Sensorinformationen können grundsätzlich auch durch eine Einrichtung zur Erfassung eines Umfeldmodells des ersten Verkehrsteilnehmers bereitgestellt werden.

Als Zustand des Objekts kommt beispielsweise dessen Position und/oder Geschwindigkeit und/oder Fahrtrichtung und/oder Trajektorie in Betracht. Die Trajektorie umfasst insbesondere einen zeitlich vorangegangenen Bewegungsverlauf und/oder einen aktuellen Bewegungsverlauf und/oder einen prognostizierten Bewegungsverlauf des Objekts. Eine Plausibilitätsprüfung kann somit auch eine historische und/oder gegenwärtige und/oder eine prognostizierte Trajektorie des Objekts einschließen. Ein kontinuierliches Nachverfolgen und Plausibilisieren eines jeweiligen Objektes werden somit ermöglicht.

Den Zustand des Objekts betreffende Informationen können entsprechend zumindest einer Weiterbildung durch den zweiten Verkehrsteilnehmer und/oder die Infrastruktureinrichtung bereitgestellt werden. Alternativ oder in Ergänzung erfolgt eine Erfassung des Zustands mittels der durch den ersten Verkehrsteilnehmer erfassten Sensorinformationen. Hierdurch kann die Prüfung der Plausibilität des Zustands des Objekts mittels Sensorinformationen des ersten Verkehrsteilnehmers erfolgen.

Ein Verkehrsteilnehmer ist beispielsweise ein Fahrzeug, ein Fußgänger, ein Radfahrer bzw. jeder andere am Verkehr teilnehmende Entität. Ein Fahrzeug kann dabei ein Kraftfahrzeug, insbesondere ein Personenkraftfahrzeug, ein Lastkraftfahrzeug, ein Motorrad, ein Elektrokraftfahrzeug oder ein Hybridkraftfahrzeug, ein Wasserfahrzeug oder ein Luftfahrzeug sein.

Entsprechend wenigstens einer Ausführungsform erfolgt die Plausibilitätsprüfung anhand eines Abgleichs eines Zustands eines durch die Objektdaten beschriebenen Objekts und der Karteninformationen, und/oder die Plausibilitätsprüfung erfolgt anhand eines Abgleichs eines Zustands eines durch die Objektdaten beschriebenen Objekts unter Heranziehung von mittels Sensoren des ersten Verkehrsteilnehmers erfassten Sensorinformationen. Bei der Plausibilitätsprüfung kann auch eine Wahrscheinlichkeit des das Objekt betreffenden Zustands überprüft werden. Beispielsweise kann es im Rahmen der Plausibilitätsprüfung als unwahrscheinlich bzw. unplausibel angesehen werden, wenn die Position eines als Fahrzeug klassifizierten Verkehrsobjekts in einem Gebäude oder eines als LKW klassifizierten Verkehrsobjekts auf einem schmalen Fußweg vorliegt. Der Umfang der Plausibilitätsprüfung kann insbesondere abhängig von den zur Verfügung stehenden Rechenressourcen des elektronischen Steuergeräts sein.

Zusätzlich zur Plausibilitätsprüfung betreffend das erfasste Objekt wird hierdurch ermöglicht Fehler der ermittelten Position und Ausrichtung des zweiten Verkehrsteilnehmers zu erkennen und ggf. zu korrigieren, die aus einer ungenauen Positionserfassung und Ausrichtungserfassung durch den zweiten Verkehrsteilnehmer, welcher das betreffende Objekt erfasst hat, resultieren.

Weiterbildungsgemäß erfolgt bei der Plausibilitätsprüfung eines Zustands des durch die Objektdaten beschriebenen Objekts unter Heranziehung von mittels Sensoren des ersten Verkehrsteilnehmers erfassten Sensorinformationen eine Zuordnungsprüfung, wobei das durch die Objektdaten beschriebene Objekt einem durch die Sensorinformationen beschriebenen Objekt zugeordnet werden soll. Die Zuordnung erfolgt insbesondere dann, wenn auf Objektidentität erkannt wird. Beispielsweise erfolgt der Abgleich unter Verwendung eines Verfahrens zur (Auto-)Korrelation oder eines sonstigen Verfahrens zum Abgleich.

Weiterbildungsgemäß werden die Karteninformationen zumindest teilweise von einer Infrastruktureinrichtung und/oder dem zweiten Verkehrsteilnehmer und/oder einem weiteren Verkehrsteilnehmer mittels Fahrzeug-zu-X Kommunikation empfangen. Alternativ oder in Ergänzung sind die Karteninformationen zumindest teilweise in einem durch den ersten Verkehrsteilnehmer umfassten Datenspeicher gespeichert.

Die empfangenen Objektdaten können bereits Klassifizierungsinformationen zur Klassifizierung des erfassten Objekts umfassen. Die Klassifikation kann das Objekt beispielsweise als Fahrzeug oder Fußgänger oder Hindernis identifizieren, wobei die Klassifizierung insbesondere durch die das Objekt erfassende Erfassungseinrichtung des zweiten Verkehrsteilnehmers bzw. der Infrastruktureinrichtung erfolgt. Erfasst beispielsweise ein Fahrzeug einen Fußgänger mittels Sensoren, erfolgt eine entsprechende Klassifizierung als Fußgänger und Aussendung der den Fußgänger betreffenden Objektdaten mit der Klassifizierungsinformation mittels Fahrzeug-zu-X Kommunikation zum Empfang durch den ersten Verkehrsteilnehmer.

Weiterbildungsgemäß erfolgt die Plausibilitätsprüfung des Zustands des durch die Objektdaten beschriebenen Objekts unter Heranziehung der Klassifizierungsinformationen zur Beschreibung einer Klassifikationsart des Objekts. Die Klassifizierungsinformationen sind insbesondere durch die empfangenen Objektdaten umfasst und/oder durch den ersten Verkehrsteilnehmer beispielsweise unter Verwendung von Sensoren des ersten Verkehrsteilnehmers ermittelt und/oder durch weitere empfangene Fahrzeug-zu-X Informationen umfasst. Beispiele für Klassifizierungsarten des Objekts sind, Fahrzeug, Fußgänger, Radfahrer, festes Hindernis und/oder detailliertere Unterscheidungen.

Weiterbildungsgemäß sind die empfangenen Objektdaten durch eine kollektive Perzeptionsnachricht ("Collective Perception Message"; CPM) insbesondere gemäß ETSI TS 103 324 umfasst. Die CPM kann somit für Funktionen mit einer ASIL-Einstufung ("Automotive Safety Integrity Level") höher als QM Verwendung finden.

Außerdem kann vorgesehen sein, dass der erste Verkehrsteilnehmer von dem zweiten Verkehrsteilnehmer und/oder der Infrastruktureinrichtung Informationen zur Bestimmung wenigstens eines Erfassungsbereichs der das Objekt detektierenden Sensorik des zweiten Verkehrsteilnehmers und/oder der Infrastruktureinrichtung empfängt. Wenn beispielsweise ein Objekt nicht detektierbar ist, obwohl es eigentlich nach einer Bewegungsprädiktion noch innerhalb des Erfassungsbereichs der Sensorik des zweiten Verkehrsteilnehmers und/oder der Infrastruktureinrichtung detektierbar sein sollte, wird es entsprechend wenigstens einer Ausführungsform entweder im größeren Umfeld gesucht und/oder die Bewegungsprädiktion für das Objekt wird korrigiert.

Ein Objekt wird insbesondere als nicht plausibilisierbar eingestuft, wenn sich das Objekt unter Berücksichtigung einer Prädiktionsgenauigkeit einer Bewegung des Objekts außerhalb des Erfassungsbereichs der Sensorik befindet.

Weiterbildungsgemäß werden nicht mögliche bzw. in deren Auftretenswahrscheinlichkeit insbesondere unter Berücksichtigung weiterer Faktoren gleich oder unterhalb eines Grenzwerts liegende Kombinationen aus Zustand und klassifiziertem Objekt bei der Plausibilitätsprüfung als nicht plausibel eingestuft. Zum Beispiel können dies sein: Motorrad mit ESC Eingriff, Fußgänger mit ABS Eingriff, Fahrrad mit Airbag Auslösung.

Weiterbildungsgemäß wird bei dem Abgleich als Abbruchkriterium eine Positionierungsvarianz und/oder eine Ausrichtungsvarianz der Erfassungsgenauigkeit durch den zweiten Verkehrsteilnehmer und/oder eine Positionierungsvarianz und/oder eine Ausrichtungsvarianz des zweiten Verkehrsteilnehmers als solches herangezogen. Entsprechend zumindest einer Ausführungsform umfassen die Objektdaten Konfidenzinformationen zur Beschreibung der Genauigkeit der Objektdatenerfassung. Die Positionierungsvarianz und/oder die Ausrichtungsvarianz können dementsprechend durch die empfangenen Objektdaten umfasst sein und/oder werden bei der Erfassung mittels der Sensoren des ersten Verkehrsteilnehmers ermittelt.

Zweckmäßigerweise ist vorgesehen eine Anzahl von Objekten eines fusionierten Umfeldmodells, welche für den Abgleich herangezogen werden, zu minimieren bzw. dahingehend zu optimieren, dass die Erstellung neuer Objekte durch die Fusion nicht zu einer Verschlechterung des Abgleichs, beispielsweise der (Auto-)korrelation führt. Hierdurch können Fehler beim Abgleich, insbesondere in Folge von Positionsabweichungen von mittels V2X ausgetauschten Positionsinformationen und Objekten des Umfeldmodells und sich hieraus gegebenenfalls ergebender Doppelerfassung desselben Objekts, vermieden werden.

Weiterbildungsgemäß werden Objektdaten nicht plausibilisierbarer bzw. als nicht plausibel eingeordneter Objekte und/oder nicht plausibilisierbare Objektdaten verworfen und/oder korrigiert werden. Wird im Rahmen der Plausibilitätsprüfung festgestellt, dass lediglich die Objektklassifizierung fehlerhaft ist, kann somit eine Korrektur der Klassifizierung vorgenommen werden. Zum Beispiel sind Fußgänger üblicherweise nicht in der Lage sich mit einer Geschwindigkeit von 50 km/h fortzubewegen und LKWs können keine vergleichbar schnellen Richtungswechsel wie Fußgänger vornehmen, sodass eine Korrektur der Klassifizierung auf Grundlage der vorliegenden Zustandsinformationen vorgenommen werden kann.

Erfindungsgemäß werden den zweiten Verkehrsteilnehmer und/oder die Infrastruktureinrichtung betreffende Informationen erfasst, wobei der Empfang dieser Informationen über einen weiteren Kommunikationsweg erfolgt ist, der unterschiedlich von dem Kommunikationsweg der empfangenen Objektdaten ist. Als weiterer Kommunikationsweg bietet sich beispielsweise eine Mobilfunkkommunikation an.

Weiterbildungsgemäß werden als den zweiten Verkehrsteilnehmer und/oder die Infrastruktureinrichtung betreffende Informationen ein Identifikator zur Identifizierung eines Senders der empfangenen Objektdaten erfasst, wobei der Empfang des Identifikators auf dem weiteren Kommunikationsweg erfolgt ist.

Entsprechend zumindest einer Ausführungsform geht dem Empfang der den zweiten Verkehrsteilnehmer und/oder die Infrastruktureinrichtung betreffenden Informationen eine Aussendung zumindest einer Anfrage zur Bereitstellung der den zweiten Verkehrsteilnehmer und/oder die Infrastruktureinrichtung betreffenden Informationen durch den ersten Verkehrsteilnehmer voraus.

Weiterbildungsgemäß ist der Identifikator zumindest teilweise in veränderlicher Weise ausgebildet, derart, dass dem Identifikator nach einer bestimmten Zeitdauer geänderte Informationen zugewiesen sein können. Insbesondere handelt es sich bei dem Identifikator um ein V2X Pseudonym zur Anonymisierung der Datenkommunikation in der Fahrzeug-zu-X Kommunikation, welche nach einer definierten Zeit, z.B. 10 Minuten, geändert wird. Alternativ oder in Ergänzung ist der Identifikator zumindest teilweise in unveränderlicher Weise ausgebildet, z.B. Sensorsetup und/oder Position. Das Aussenden von Nachrichten mit Fehlinformationen durch einen unberechtigten Dritten wird somit erschwert.

Ein Vorteil, welcher sich hieraus ergibt ist, dass die empfangenen Objektdaten bzw. der Inhalt einer empfangenen V2X Nachricht dem tatsächlichen Sender zumindest mit größerer Wahrscheinlichkeit zugeordnet werden können. Dadurch könnten den empfangenen Objektdaten höhere Konfidenzwerte zur Beschreibung einer Vertrauenswürdigkeit der Informationen zugeordnet werden, da hierdurch beispielsweise Manipulationen von Objektdaten durch einen vom tatsächlichen originären Ersteller der Objektdaten unterschiedlichen Sender einfacher erkennbar sind.

Der weitere Kommunikationsweg hat dabei weiterbildungsgemäß auch eine von dem zweiten Verkehrsteilnehmer und/oder der Infrastruktureinrichtung separate Informationsquelle, welche den zweiten Verkehrsteilnehmer und/oder die Infrastruktureinrichtung betreffende Informationen und/oder den Identifikator des zweiten Verkehrsteilnehmers und/oder der Infrastruktureinrichtung ermittelt und dem ersten Verkehrsteilnehmer bereitstellt.

Beispielsweise kann die Zuordnung des eigentlichen Senders bei Empfang von Informationen über einen weiteren Kommunikationsweg in der Weise ausgebildet sein, dass der erste Verkehrsteilnehmer über Mobilfunk infrastrukturbasierte V2X-Sender der Umgebung anfragt und/oder eine Liste mit Transaktionsnummern (TANs) empfängt, die als nächstes von den jeweiligen Sendern der Umgebung, bspw. 200 m, Reichweite verwendet werden und/oder die Liste wird vom Fahrzeug zwischengespeichert und die zukünftig empfangenen V2X Nachrichten müssen diese TAN beinhalten. Wenn eine TAN mehrfach verwendet wird, kann diese wiederrum abgefangen und kopiert werden. Eine einmalige Verwendung einer TAN ist daher als zweckmäßig anzusehen.

Die V2X Nachricht kann beispielsweise zunächst in eine Validierungsqueue gespeichert werden oder sie wird bereits verarbeitet, jedoch unter dem Vorbehalt im weiteren Verlauf verworfen zu werden. Hierdurch können Probleme in Folge einer Übertragungslatenz bei der Abfrage überwunden werden.

Gemäß Anspruch 10 beschreibt die Offenbarung eine elektronische Steuervorrichtung zur Mitführung durch einen ersten Verkehrsteilnehmer, umfassend eine Recheneinrichtung zum Erfassen von mittels Fahrzeug-zu-X Kommunikation empfangener Objektdaten zur Beschreibung eines durch wenigstens eine Erfassungseinrichtung eines zweiten Verkehrsteilnehmers und/oder wenigstens eine Erfassungseinrichtung einer Infrastruktureinrichtung detektierten Objekts, und zur Prüfung der Plausibilität eines Zustands des durch die empfangenen Objektdaten beschriebenen Objekts unter Heranziehung von Karteinformationen und/oder Sensorinformationen, wobei die Sensorinformationen unter Verwendung von Sensoren des ersten Verkehrsteilnehmers ermittelt werden, wobei den zweiten Verkehrsteilnehmer und/oder die Infrastruktureinrichtung betreffende Informationen erfasst werden, wobei der Empfang dieser Informationen über einen weiteren Kommunikationsweg erfolgt ist, der unterschiedlich von dem Kommunikationsweg der empfangenen Objektdaten ist.

In Abhängigkeit des Verkehrsteilnehmers kann ein Mitführen insbesondere im Fall eines Fahrzeugs durch Montage in dem ersten Verkehrsteilnehmer oder beispielsweise im Fall eines Fußgängers durch Mitsichtragen stattfinden.

Gemäß einem weiteren nicht beanspruchten Aspekt der Erfindung ist die Vorrichtung eingerichtet, ein Verfahren nach wenigstens einem der beschriebenen Ausführungsformen auszuführen.

Eine Recheneinrichtung kann jedwede Einrichtung sein, die ausgebildet ist, um zumindest eines der genannten Signale zu verarbeiten. Insbesondere kann die Recheneinrichtung ein Prozessor, beispielsweise ein ASIC, ein FPGA, ein digitaler Signalprozessor, ein Hauptprozessor (CPU von engl.: "Central Processing Unit"), ein Multizweckprozessor (MPP von engl.: "Multi Purpose Prozessor") oder Ähnliches sein.

In einer Weiterbildung der angegebenen Vorrichtung weist die angegebene Vorrichtung einen Speicher auf. Dabei ist das angegebene Verfahren in Form eines Computerprogramms in dem Speicher hinterlegt und die Recheneinrichtung zur Ausführung des Verfahrens vorgesehen, wenn das Computerprogramm aus dem Speicher in die Recheneinrichtung geladen ist.

Gemäß einem weiteren nicht beanspruchten Aspekt der Erfindung umfasst ein Computerprogramm Programmcodemittel, um alle Schritte eines der angegebenen Verfahren durchzuführen, wenn das Computerprogramm auf einem Computer oder einer der angegebenen Vorrichtungen ausgeführt wird.

Gemäß einem weiteren nicht beanspruchten Aspekt der Erfindung enthält ein Computerprogrammprodukt einen Programmcode, der auf einem computerlesbaren Datenträger gespeichert ist und der, wenn er auf einer Datenverarbeitungseinrichtung ausgeführt wird, eines der angegebenen Verfahren durchführt.

### Beschreibung der Figuren

Einige besonders vorteilhafte Ausgestaltungen der Erfindung sind in den Unteransprüchen angegeben. Weitere bevorzugte Ausführungsformen ergeben sich auch aus der nachfolgenden Beschreibung von Ausführungsbeispielen an Hand von Figuren.

In schematischer Darstellung zeigt:
- Fig. 1: ein Ausführungsbeispiel des Verfahrens gemäß der Offenbarung, und
- Fig. 2: ein Ausführungsbeispiel der elektronischen Steuervorrichtung gemäß der Offenbarung.

### Detaillierte Beschreibung der Figuren

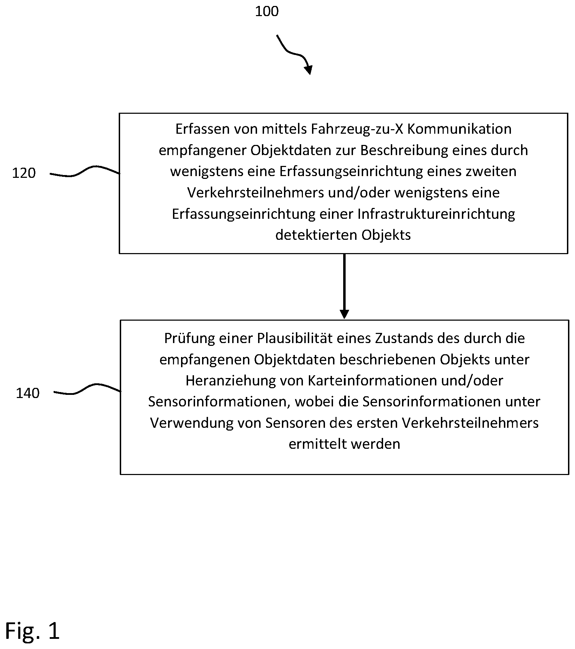

Die Fig. 1 zeigt in Form eines Ablaufdiagramms ein beispielhaftes Verfahren 100 zur inhaltlichen Absicherung von Daten zur kollektiven Perzeption und Ausführung durch eine elektronische Steuervorrichtung eines ersten Verkehrsteilnehmers entsprechend einer Ausführungsform der Offenbarung. In einem Schritt 120 erfolgt dabei eine Erfassung von mittels Fahrzeug-zu-X Kommunikation empfangener Objektdaten zur Beschreibung eines durch wenigstens eine Erfassungseinrichtung eines zweiten Verkehrsteilnehmers und/oder wenigstens eine Erfassungseinrichtung einer Infrastruktureinrichtung detektierten Objekts. In einem Schritt 140 wird eine Plausibilität eines Zustands des durch die empfangenen Objektdaten beschriebenen Objekts unter Heranziehung von Karteinformationen und/oder Sensorinformationen geprüft, wobei die Sensorinformationen unter Verwendung von Sensoren des ersten Verkehrsteilnehmers ermittelt werden.

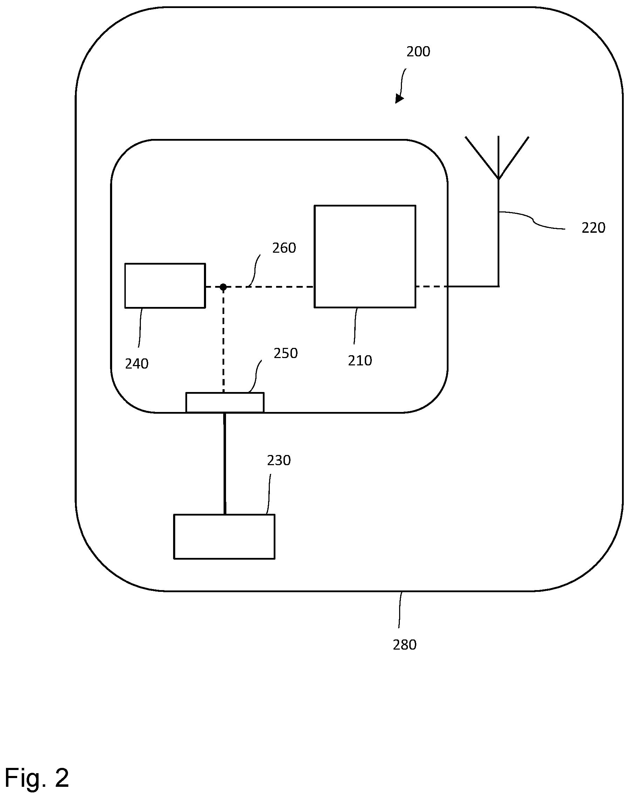

Die Fig. 2 zeigt in schematischer Darstellung ein Ausführungsbeispiel der elektronischen Steuervorrichtung 200 zur Mitführung durch einen ersten Verkehrsteilnehmer 280, umfassend eine Recheneinrichtung 210 zum Erfassen von mittels Fahrzeug-zu-X Kommunikation empfangener Objektdaten zur Beschreibung eines durch wenigstens eine Erfassungseinrichtung eines zweiten Verkehrsteilnehmers und/oder wenigstens eine Erfassungseinrichtung einer Infrastruktureinrichtung detektierten Objekts, und zur Prüfung der Plausibilität eines Zustands des durch die empfangenen Objektdaten beschriebenen Objekts unter Heranziehung von Karteinformationen und/oder Sensorinformationen, wobei die Sensorinformationen unter Verwendung zumindest eines Sensors 230 des ersten Verkehrsteilnehmers 280 ermittelt werden. Weiterbildungsgemäß können die Karteninformationen in einem durch den ersten Verkehrsteilnehmer 280 und/oder durch die elektronische Steuervorrichtung 200 umfassten Datenspeicher 240 gespeichert sein, wobei vorgesehen sein kann, dass die Recheneinrichtung 210 über ein Kommunikationsmittel 260 auf die Karteninformationen zugreifen kann. Die elektronische Steuervorrichtung 200 bzw. die Recheneinrichtung 210 kann ausgestaltet sein über eine Kommunikationsschnittstelle 250, zum Beispiel eine Datenbusschnittelle, die Sensorinformationen von dem Sensor 230 zu empfangen. Entsprechend wenigstens einer beispielhaften Ausführungsform umfasst die elektronische Steuervorrichtung 200 eine Antenne 220 zur Fahrzeug-zu-X Kommunikation, welche mit der Recheneinrichtung zur Übertragung empfangener und/oder auszusendender Fahrzeug-zu-X Nachrichten verbunden ist. Auf die Darstellung weiterer Komponenten beispielsweise bezüglich der Fahrzeug-zu-X Kommunikation, wie beispielswiese Receiver, Kompensator etc., welche in der drahtlosen Übertragungstechnik üblicherweise Anwendung finden, wurde lediglich der Übersichtlichkeit halber verzichtet.

Allgemein sei darauf hingewiesen, dass unter Fahrzeug-zu-X Kommunikation insbesondere eine direkte Kommunikation zwischen Fahrzeugen und/oder zwischen Fahrzeugen und Infrastruktureinrichtungen verstanden wird. Beispielsweise kann es sich also um Fahrzeug-zu-Fahrzeug Kommunikation oder um Fahrzeug-zu-Infrastruktur Kommunikation handeln. Sofern im Rahmen dieser Anmeldung auf eine Kommunikation zwischen Fahrzeugen Bezug genommen wird, so kann diese grundsätzlich beispielsweise im Rahmen einer Fahrzeug-zu-Fahrzeug Kommunikation erfolgen, welche typischerweise ohne Vermittlung durch ein Mobilfunknetz oder eine ähnliche externe Infrastruktur erfolgt und welche deshalb von anderen Lösungen, welche beispielsweise auf ein Mobilfunknetz aufbauen, abzugrenzen ist. Beispielsweise kann eine Fahrzeug-zu-X Kommunikation unter Verwendung der Standards IEEE 802.11p oder IEEE 1609.4 erfolgen. Eine Fahrzeug-zu-X Kommunikation kann auch als C2X-Kommunikation oder V2X-Kommunikation bezeichnet werden. Die Teilbereiche können als C2C

(Car-to-Car), V2V (Vehicle-to-Vehicle) oder C2I (Car-to-Infrastructure), V2I (Vehicle-to-Infrastrukture) bezeichnet werden. Die Erfindung schließt jedoch Fahrzeug-zu-X Kommunikation mit Vermittlung beispielsweise über ein Mobilfunknetz explizit nicht aus.

## Patentansprüche

1. Verfahren (100) zur inhaltlichen Absicherung von Objektdaten zur kollektiven Perzeption und Ausführung durch eine elektronische Steuervorrichtung eines ersten Verkehrsteilnehmers, umfassend die Schritte:
- Erfassen (120) von mittels Fahrzeug-zu-X Kommunikation empfangener Objektdaten zur Beschreibung eines durch wenigstens eine Erfassungseinrichtung eines zweiten Verkehrsteilnehmers und/oder wenigstens eine Erfassungseinrichtung einer Infrastruktureinrichtung detektierten Objekts, und
- Prüfung (140) einer Plausibilität eines Zustands des durch die empfangenen Objektdaten beschriebenen Objekts unter Heranziehung von Karteninformationen und/oder Sensorinformationen, wobei die Sensorinformationen unter Verwendung von Sensoren des ersten Verkehrsteilnehmers ermittelt werden,
wobei den zweiten Verkehrsteilnehmer und/oder die Infrastruktureinrichtung betreffende Informationen erfasst werden, **dadurch gekennzeichnet, dass** der Empfang dieser Informationen über einen weiteren Kommunikationsweg erfolgt ist, der unterschiedlich von dem Kommunikationsweg der empfangenen Objektdaten ist.

2. Verfahren gemäß Anspruch 1, wobei der Zustand des Objekts dessen Position und/oder Geschwindigkeit und/oder Fahrtrichtung und/oder Trajektorie ist, wobei die Trajektorie einen zeitlich vorangegangenen Bewegungsverlauf und/oder einen aktuellen Bewegungsverlauf und/oder einen prognostizierten Bewegungsverlauf des Objekts beschreibt.

3. Verfahren gemäß zumindest einem der vorhergehenden Ansprüche, wobei die empfangenen Objektdaten durch eine kollektive Perzeptionsnachricht umfasst sind.

4. Verfahren gemäß zumindest einem der vorhergehenden Ansprüche, wobei die Objektdaten Klassifizierungsinformationen zur Beschreibung einer Klassifizierungsart des detektierten Objekts umfassen und die Plausibilitätsprüfung des Zustands des durch die Objektdaten beschriebenen Objekts unter Heranziehung der Klassifizierungsinformationen zur Beschreibung einer Klassifikationsart des Objekts erfolgt.

5. Verfahren gemäß Anspruch 4, wobei nicht mögliche und/oder in deren Auftretenswahrscheinlichkeit gleich oder unterhalb eines Grenzwerts liegende Kombinationen des Zustands des Objekts und der Klassifizierung des Objekts bei der Plausibilitätsprüfung als nicht plausibel eingestuft werden.

6. Verfahren gemäß zumindest einem der vorhergehenden Ansprüche, wobei die Plausibilitätsprüfung anhand eines Abgleichs des Zustands des durch die empfangenen Objektdaten beschriebenen Objekts und der Karteninformationen und/oder anhand eines Abgleichs des Zustands des durch die empfangenen Objektdaten beschriebenen Objekts mit den mittels der Sensoren des ersten Verkehrsteilnehmers erfassten Sensorinformationen erfolgt.

7. Verfahren gemäß dem vorhergehenden Anspruch, wobei als Abbruchkriterium des Abgleichs eine Positionierungsvarianz und/oder eine Ausrichtungsvarianz der Erfassungsgenauigkeit des Objekts durch den zweiten Verkehrsteilnehmer und/oder eine Positionierungsvarianz und/oder eine Ausrichtungsvarianz des zweiten Verkehrsteilnehmers als solches herangezogen wird.

8. Verfahren gemäß zumindest einem der vorhergehenden Ansprüche, wobei ein als nicht plausibel eingeordnetes Objekt und/oder nicht plausibilisierbare Objektdaten verworfen und/oder korrigiert werden.

9. Verfahren gemäß Anspruch 1, wobei als den zweiten Verkehrsteilnehmer und/oder die Infrastruktureinrichtung betreffende Informationen zumindest ein Identifikator zur Identifizierung eines Senders der empfangenen Objektdaten erfasst werden, wobei der Empfang des Identifikators auf dem weiteren Kommunikationsweg erfolgt.

10. Elektronische Steuervorrichtung (200) zur Mitführung durch einen ersten Verkehrsteilnehmer (280), umfassend eine Recheneinrichtung (210) zum Erfassen von mittels Fahrzeug-zu-X Kommunikation empfangener Objektdaten zur Beschreibung eines durch wenigstens eine Erfassungseinrichtung eines zweiten Verkehrsteilnehmers und/oder wenigstens eine Erfassungseinrichtung einer Infrastruktureinrichtung detektierten Objekts, wobei die Recheneinrichtung (210) weiterhin zur Prüfung der Plausibilität eines Zustands des durch die empfangenen Objektdaten beschriebenen Objekts unter Heranziehung von Karteinformationen und/oder Sensorinformationen ausgestaltet ist, wobei die Sensorinformationen unter Verwendung zumindest eines Sensors (230) des ersten Verkehrsteilnehmers (280) ermittelt werden, wobei den zweiten Verkehrsteilnehmer und/oder die Infrastruktureinrichtung betreffende Informationen erfasst werden, **dadurch gekennzeichnet, dass** der Empfang dieser Informationen über einen weiteren Kommunikationsweg erfolgt ist, der unterschiedlich von dem Kommunikationsweg der empfangenen Objektdaten ist.

11. Verwendung der elektronischen Steuervorrichtung (200) gemäß Anspruch 10 in einem Fahrzeug (280).

## Claims

1. A method (100) for securing the content of object data for collective perception and execution by an electronic control device of a first road user, comprising the steps of:
- detecting (120) object data received by means of vehicle-to-X communication for describing an object detected by at least one detection device of a second road user and/or at least one detection device of an infrastructure device, and
- checking (140) a plausibility of a state of the object described by the received object data using map information and/or sensor information, wherein the sensor information is determined using sensors of the first road user,
wherein information relating to the second road user and/or the infrastructure device is detected, **characterized in that** this information is received via a further communication path which is different from the communication path of the received object data.

2. The method according to claim 1, wherein the state of the object is its position and/or speed and/or direction of travel and/or trajectory, wherein the trajectory describes a time-preceding course of movement and/or a current course of movement and/or a predicted course of movement of the object.

3. The method according to at least one of the preceding claims, wherein the received object data is comprised by a collective perception message.

4. The method according to at least one of the preceding claims, wherein the object data comprises classification information for describing a classification type of the detected object, and the plausibility check of the state of the object described by the object data is performed by using the classification information for describing a classification type of the object.

5. The method according to claim 4, wherein non-possible combinations of the state of the object and the classification of the object in the plausibility check which are equal to or below a limit value and/or in their probability of occurrence are classified as non-plausible.

6. The method according to at least one of the preceding claims, wherein the plausibility check is carried out on the basis of a comparison of the state of the object described by the received object data and the map information and/or on the basis of a comparison of the state of the object described by the received object data with the sensor information detected by means of the sensors of the first road user.

7. The method according to the preceding claim, wherein a positioning variance and/or an orientation variance of the detection accuracy of the object by the second road user and/or a positioning variance and/or an orientation variance of the second road user as such is used as the termination criterion of the comparison.

8. The method according to at least one of the preceding claims, wherein an object arranged as implausible and/or implausible object data are discarded and/or corrected.

9. The method according to claim 1, wherein at least one identifier for identifying a transmitter of the received object data is detected as information relating to the second road user and/or the infrastructure device, wherein the identifier is received on the further communication path.

10. An electronic control device (200) for being carried by a first road user (280), comprising a computing device (210) for detecting object data received by means of vehicle-to-X communication for describing an object detected by at least one detection device of a second road user and/or at least one detection device of an infrastructure device, wherein the computing device (210) is further configured for checking the plausibility of a state of the object described by the received object data using map information and/or sensor information, wherein the sensor information is determined using at least one sensor (230) of the first road user (280), wherein information relating to the second road user and/or the infrastructure device is detected, **characterized in that** the reception of this information is effected on a further communication path which is different from the communication path of the received object data.

11. A use of the electronic control device (200) according to claim 10 in a vehicle (280).

## Revendications

1. Procédé (100) permettant de s'assurer du contenu de données d'objet pour la perception et l'exécution collectives par une unité de commande électronique d'un premier usager de la route, comprenant les étapes suivantes :
- la saisie (120) de données d'objet reçues au moyen d'une communication véhicule à X pour la description d'un objet détecté par au moins un dispositif de détection d'un second usager de la route et/ou au moins un dispositif de détection d'un dispositif d'infrastructure, et
- le contrôle (140) de la plausibilité d'un état de l'objet décrit par les données d'objet reçues en utilisant des informations cartographiques et/ou des informations de capteur, dans lequel les informations de capteur sont déterminées en utilisant des capteurs du premier usager de la route,
dans lequel des informations concernant le second usager de la route et/ou le dispositif d'infrastructure sont saisies, **caractérisé en ce que** la réception desdites informations est effectuée par l'intermédiaire d'une autre voie de communication, qui est différente de la voie de communication des données d'objet reçues.

2. Procédé selon la revendication 1, dans lequel l'état de l'objet est sa position et/ou sa vitesse et/ou sa direction de déplacement et/ou sa trajectoire, dans lequel la trajectoire décrit une évolution de mouvement antérieure dans le temps et/ou une évolution de mouvement actuelle et/ou une évolution de mouvement prévue de l'objet.

3. Procédé selon l'une quelconque des revendications précédentes, dans lequel les données d'objet reçues sont comprises dans un message de perception collectif.

4. Procédé selon l'une quelconque des revendications précédentes, dans lequel les données d'objet comprennent des informations de classification pour décrire un type de classification de l'objet détecté et le contrôle de plausibilité de l'état de l'objet décrit par les données d'objet est effectué en utilisant les informations de classification pour décrire un type de classification de l'objet.

5. Procédé selon la revendication 4, dans lequel des combinaisons non possibles et/ou ayant une probabilité d'occurrence égale ou inférieure à une valeur limite de l'état de l'objet et de la classification de l'objet sont considérées comme non plausibles lors du contrôle de plausibilité.

6. Procédé selon au moins l'une des revendications précédentes, dans lequel le contrôle de plausibilité est effectué sur la base d'une comparaison de l'état de l'objet décrit par les données d'objet reçues et des informations cartographiques et/ou sur la base d'une comparaison de l'état de l'objet décrit par les données d'objet reçues avec les informations de capteur détectées par les capteurs du premier usager de la route.

7. Procédé selon la revendication précédente, dans lequel une variance de positionnement et/ou une variance d'alignement de la précision de détection de l'objet par le second usager de la route et/ou une variance de positionnement et/ou une variance d'alignement du second usager de la route en tant que telle est utilisée comme critère d'interruption de la comparaison.

8. Procédé selon au moins l'une des revendications précédentes, dans lequel un objet classé comme non plausible et/ou des données d'objet non plausibles sont rejetés et/ou corrigés.

9. Procédé selon la revendication 1, dans lequel, en tant qu'informations concernant le second usager de la route et/ou le dispositif d'infrastructure saisies, au moins un identifiant permet d'identifier un émetteur des données d'objet reçues, dans lequel la réception de l'identifiant est effectué par l'autre voie de communication.

10. Unité de commande électronique (200) destinée à être entraînée par un premier usager de la route (280), comprenant un dispositif de calcul (210) pour saisir des données d'objet reçues par communication véhicule à X pour décrire un objet détecté par au moins un dispositif de détection d'un second usager de la route et/ou au moins un dispositif de détection d'un dispositif d'infrastructure, dans lequel le dispositif de calcul (210) est en outre conçu pour contrôler la plausibilité d'un état de l'objet décrit par les données d'objet reçues en utilisant des informations cartographiques et/ou des informations de capteur, dans lequel les informations de capteur sont déterminées en utilisant au moins un capteur (230) du premier usager de la route (280), dans lequel les informations concernant le second usager de la route et/ou le dispositif d'infrastructure sont saisies, **caractérisé en ce que** la réception desdites informations est effectuée par l'intermédiaire d'une autre voie de communication, qui est différente de la voie de communication des données d'objet reçues.

11. Utilisation de l'unité de commande électronique (200) selon la revendication 10 dans un véhicule (280).
